# EUROPÄISCHE PATENTSCHRIFT

(11) **EP 0 598 698 B1**
(45) Veröffentlichungstag und Bekanntmachung des Hinweises auf die Patenterteilung: **03.12.1997**
(21) Anmeldenummer: 93890202.0
(22) Anmeldetag: 19.10.1993
(51) Int. Cl.: B65G 59/06

(54) **Auswerfer**
Ejector
Ejecteur

(30) Priorität: 16.11.1992 AT 2264/92
(43) Veröffentlichungstag der Anmeldung: 25.05.1994
(73) Patentinhaber: P.E.E.M. FÖRDERANLAGEN Ges.m.b.H., 8051 Graz (AT)
(72) Erfinder: Neukam, Helmut, A-8071 Hausmannstätten (AT)
(74) Vertreter: Kliment, Peter, Dipl.-Ing.

(56) Entgegenhaltungen:
- GB-A- 1 086 182
- US-A- 3 970 216

## Beschreibung

Die Erfindung bezieht sich auf eine Ausgabeeinheit gemäß dem Obergeriff des Anspruches 1.

Eine solche Ausgabeeinheit wurde z.B. durch die US-PS 3 970 216 bekannt. Bei dieser bekannten Lösung ist der zweite Arm des Winkelhebels in dem seinem freien Endbereich nahen Bereich konvex ausgebogen. Beim Ausschwenken des ersten, den gesamten Warenstapel haltenden Schenkels eines ersten, unter einer Drehachse liegenden Armes des Winkelhebels aus dem lichten Querschnitt des Schachtes schiebt sich dieser konvex gebogene Bereich des zweiten Armes des Winkelhebels zwischen das unterste auszugebende Stück des Warenstapels und das unmittelbar auf diesem liegende Stück. Dadurch wird der verbleibende Warenstapel vom zweiten Arm des Winkelhebels formschlüssig gehalten, während das unterste Stück des bisherigen Stapels mehr und mehr freigegeben wird und schließlich nach unten ausgegeben wird.

Der Nachteil dieser Lösung liegt darin, daß die Ausgabeeinheit genau auf die auszugebenden Stücke abgestimmt werden muß und bei einer Änderung der auszugebenden Waren auch die Ausgabeeinheit entsprechend geändert werden muß.

Weiters wurde durch die CH-PS 654 274 eine Ausgabeeinheit bekannt, die neben einem den Warenstapel in einem Ausgabeschacht haltenden Winkelhebel eine Klemmeinrichtung aufweist, die durch ein Paar von Klemm-Winkelhebeln gebildet ist, deren eine Arme mit deren Stirnseiten an den über dem auszugebenden Stück liegenden Stapel von Stücken zur Anlage bringbar sind. Weiters weist die Ausgabeeinheit ein Paar von Winkelhebeln auf, deren erste Arme in einer Sperrstellung in den lichten Raum des Schachtes eingreifen. Dabei erfolgt die Steuerung der Klemm-Winkelhebel gemeinsam mit der Steuerung jenes Paares von Winkelhebeln, deren erste Arme in einer Sperrstellung in den lichten Raum des Schachtes eingreifen und den gesamten Stapel abstützen. Dabei sind je ein Winkelhebel und ein Klemm-Winkelhebel an einer gemeinsamen Achse schwenkbar gehalten, wobei sämtliche Winkelhebel gegen deren Sperr- bzw. Klemmstellung vorgespannt und von umlaufenden Nocken gesteuert sind.

Weiters wurde durch die DD-PS 260 267 eine Ausgabeeinheit bekannt, bei der am unteren Ende eines einen Stapel von auszugebenden Stücken aufnehmenden Schachtes zwei senkrecht zum Schacht bewegbare Platten vorgesehen sind, von denen die untere in einer Sperrstellung in den lichten Raum des Schachtes eingreift und die obere mit ihrer einen Stirnseite an dem Stapel zur Anlage bringbar ist, um diesen zu klemmen. Dabei sind diese beiden Platten über zwei Winkelhebel miteinander gekoppelt und wechselweise in einander entgegengesetzten Richtungen senkrecht zur Längsachse des Schachtes bewegbar.

Bei den beiden letzteren Lösungen ergibt sich der Nachteil eines sehr großen Platzbedarfs seitlich neben dem Schacht, um die Ausgabeeinheit anordnen zu können. Außerdem stellen beide bekannte Ausgabeeinheiten konstruktiv sehr aufwendige Lösungen dar.

Ziel der Erfindung ist es eine Ausgabeeinheit der eingangs erwähnten Art vorzuschlagen, bei der diese Nachteile vermieden sind und die sich durch einen einfachen und platzsparenden Aufbau auszeichnet.

Erfindungsgemäß wird dies bei einer Ausgabeeinheit der eingangs erwähnten Art durch die kennzeichnenden Merkmale des Anspruches 1 erreicht.

Auf diese Weise ist eine sichere Ausgabe der Waren nach unten zu möglich, wobei seitlich des Schachtes lediglich Platz für die Auslenkung des Winkelhebels gelassen werden muß, der jedoch, insbesondere bei Ausgabeeinheiten für Waren mit Stücken mit größerer Grundfläche, wie z.B. CD's, Kassetten u.dgl., einen weit geringeren Leerraum zwischen benachbarten Schächten erfordert als ein herkömmlicher Ausstoßer. Außerdem ergibt sich auch ein einfacher Aufbau, da eben auf einen Boden des Schachtes verzichtet werden kann, da die Stücke in der Sperrstellung des Winkelhebels von diesem abgestützt sind, wodurch auch mit einer sehr geringen Zahl an Einzelteilen das Auslangen gefunden wird.

Durch die Merkmale des Anspruches 2 wird ein sehr sicherer Halt des Stapels in der Freigabestellung der Rückhalteeinrichtung gewährleistet, wobei aufgrund des elastisch verformbaren Materials relativ große Toleranzen zugelassen werden können, da diese durch die Verformung des Belages aufgenommen werden. Weiters ergibt sich durch den elstomeren Belag auch eine sehr weitgehende Schonung der auszugebenden Warenstücke.

Durch die Merkmale des Anspruches 3 ergibt sich eine sehr gute Abstützung des im Schacht gehaltenen Stapels von auszugebenden Stücken. Außerdem kann dabei während der Ausgabe des untersten Stückes der übrige Stapel durch die Beläge der im wesentlichen sich in Richtung der Längsachse des Schachtes erstreckende Arme der Winkelhebel sehr sicher gehalten werden. Nach der Rückkehr der Winkelhebel in deren Sperrstellung, in der die Schenkel der einen Arme der Winkelhebel in den lichten Querschnitt des Schachtes eingreifen, kann der Stapel nach unten nachrutschen bis er auf die in den lichten Querschnitt des Schachtes eingreifenden Schenkel der Winkelhebel aufliegt.

Weiters läßt sich dadurch auch sehr einfach eine im wesentlichen synchrone Bewegung der beiden Winkelhebel sicherstellen, wodurch ein Verklemmen einzelner Stücke vermieden wird.

Die Merkmale des Anspruches 4 ermöglichen eine sehr einfache Konstruktion der Rückhalteeinrichtung, bzw. deren Antriebes.

Die Erfindung wird nun anhand der Zeichnung näher erläutert. Dabei zeigen:
Fig. 1 und 2 eine erste Ausführungsform einer erfindungsgemäßen Ausgabeeinheit in Sperr- und Freigabestellung und
Fig. 3 und 4 eine zweite Ausführungsform einer erfindungsgemäßen Ausgabeeinheit in Sperr- und Freigabestellung.

Bei allen Ausführungsformen ist ein Schacht 1 vorgesehen, in dessen unterem Endbereich zwei parallel zueinander verlaufende über Winkel 2 gehaltene Träger 3 gehalten sind.

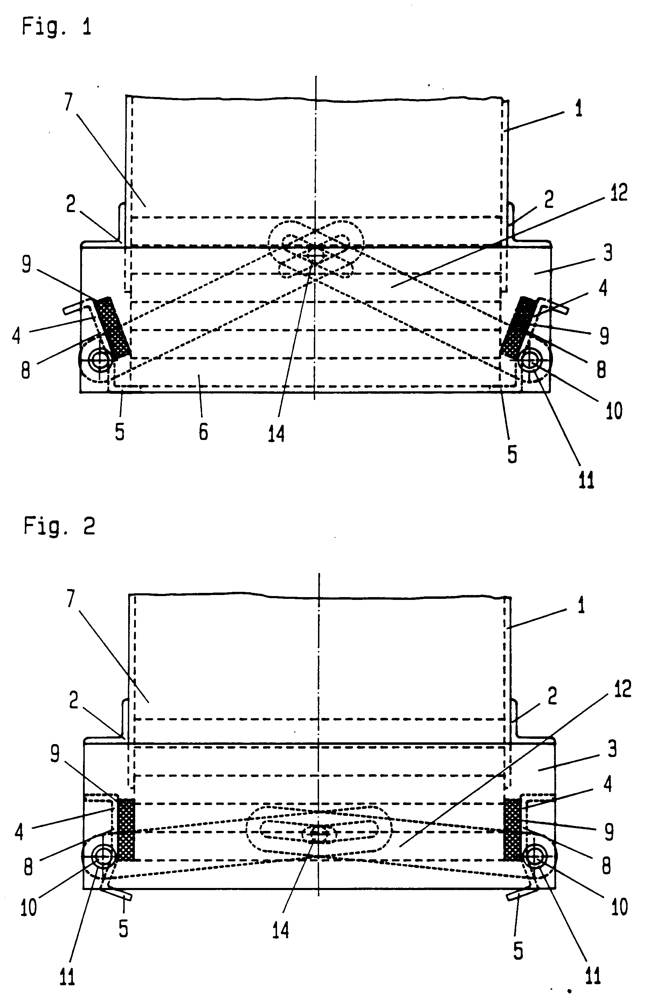

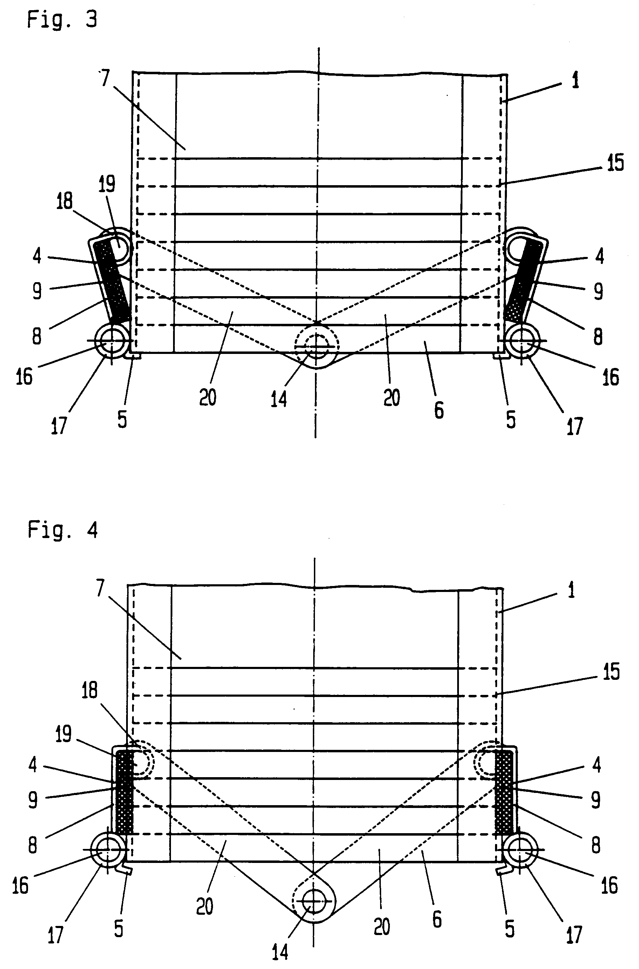

In diesen Trägern 3 sind Winkelhebel 4 um je eine Drehachse schwenkbar gehalten, deren einer Schenkel 5 ihrer ersten, unter den Drehachsen liegenden Armein der Sperrstellung (Fig. 1, Fig. 3) in den lichten Querschnitt des Schachtes 1 hineinragen und als Auflager für das unterste Stück 6 eines einzelweise auszugebenden Stapels 7 einer Ware dienen.

Der zweite Arm 8 des Winkelhebels 4 steht in der Freigabestellung (Fig. 2, Fig. 4) der Ausgabeeinheit im wesentlichen parallel zur Längsachse des Schachtes 1. Dieser Arm 8 ist mit einem Elastomerbelag 9 belegt. Dabei ist zwischen der Unterkante des Belages 9 und dem Schenkel 5 des ersten Armes des Winkelhebels 4 ein Abstand eingehalten, der zumindest der Höhe eines auszugebenden Warenstückes 6 entspricht.

Wie aus der Fig. 2 und 4 zu ersehen ist, wird der Stapel 7 in der Freigabestellung der beiden Winkelhebel 4 durch Anpressung der Elastomerbeläge 9 an diesen gehalten. Da die Schenkel 5 aus dem Bereich des lichten Querschnittes des Schachtes 1 herausgeschwenkt sind, fällt das unterste Stück 6 nach unten und wird so ausgegeben.

Bei der Ausführungsform nach der Fig. 1 und 2 ist der Winkelhebel 4 drehfest mit einer Welle 10 verbunden, die in den Trägern 3 gehaltenen Buchsen 11 gehalten ist.

Diese Wellen 10 sind drehfest mit Hebeln 12 verbunden, die in ihren freien Endbereichen mit Längsschlitzen 13 versehen sind, die von einem Stift 14 durchsetzt sind, an dem ein nicht dargestellter Antrieb, z.B. eine mit einem Druckmedium beaufschlagbare Zylinder-Kolbenanordnung, angreift und diesen in Längsrichtung des Schachtes 1 bewegt. Dadurch werden die Winkelhebel 4 in deren Sperrstellung (Fig. 1) bzw. deren Freigabestellung (Fig. 2) gebracht.

Die Ausführungsform nach den Fig. 3 und 4 unterscheidet sich von jener nach den Fig. 1 und 2, dadurch, daß der Schacht 1' durch zwei einander entgegengerichtete U-förmig abgekantete Bleche 15 gebildet ist, bei denen die Stege in deren untersten Bereich ausgenommen sind, um zwischen den Armen der U-förmig abgekanteten Bleche 15 die Winkelhebel 4 aufnehmen zu können, die an Achsen 16 schwenkbar gehalten sind.

Dabei sind an die Winkelhebel 4 Naben 17 angeformt.

Im freien Endbereich der Arme 8 der Winkelhebel 4 sind Laschen 18 angeformt, in die Stifte 19 eingreifen, die in Lenkern 20 gehalten sind. Dabei sind die beiden Lenker 20 mit einem Stift 14 gelenkig verbunden, der mit einem nicht dargestellten Antrieb verbunden ist und in Längsrichtung des Schachtes 1' bewegbar ist. Durch die Bewegung des die Lenker 20 verbindenden Stiftes 19 in Richtung der Schächte 1 werden die Arme 8 der Winkelhebel 4 nach außen bzw. innen gedrängt und dadurch verschwenkt.

## Patentansprüche

1. Ausgabeeinheit mit einem Stapel von einzeln auszugebenden Stücken und mit einem den Stapel (7) aufnehmenden vertikalen oder schräg nach unten verlaufenden Schacht (1), dessen lichter Querschnitt den entsprechenden Abmessungen der auszugebenden Stücke entspricht, und mindestens einem am unteren Ende des Schachtes (1) angeordneten und in einer Querschnittsebene desselben verlaufenden Achse schwenkbar gehaltenen zweiarmigen Winkelhebel (4), dessen einer unterhalb der Achse liegender Arm einen in einer Sperrstellung in den lichten Raum des Schachtes eingreifenden Schenkel (5) aufweist, der in einer Freigabestellung aus dem lichten Raum des Schachtes (1) zurückgezogen ist, wobei der zweite, oberhalb der Achse liegende Arm (8) des Winkelhebels (4) als eine relativ zum Schacht (1) bewegbare Halteeinrichtung zum Halten des über dem auszugebenden Stück (6) liegenden Stapels (7) von Stücken vorgesehen ist, **dadurch gekennzeichnet**, daß der als Klemmeinrichtung ausgebildete zweite Arm (8) des Winkelhebels (4) in der Freigabestellung des Schenkels (5) des ersten Armes des Winkelhebels (4) in einer im wesentlichen parallel zur Achse des Schachtes verlaufenden Ebene klemmend an dem über dem auszugebenden Stück (6) liegenden Stapel (7) anliegt, wobei der an dem Stapel (7) anliegende Bereich des zweiten Armes (8) einen Abstand vom in der Sperrstellung des ersten Armes in den lichten Raum des Schachtes (1) eingreifenden Schenkel (5) aufweist, der zumindest der Höhe der auszugebenden Stücke (6) entspricht.

2. Ausgabeeinheit nach Anspruch 1, **dadurch gekennzeichnet**, daß der in der Freigabestellung den Stapel (7) klemmende zweite Arm (8) des Winkelhebels (4) teilweise mit einem elastisch verformbaren Material, vorzugsweise einem Elastomer mit hohem Reibungskoeffizienten, an der den auszugebenden Waren zugekehrten Seite belegt ist, wobei zwischen dem Belag (9) und dem Schenkel (5) des ersten Armes des Winkelhebels (4) zumindest ein der Höhe der auszugebenden Stücke (6) entsprechender Abstand vorhanden ist.

3. Ausgabeeinheit nach Anspruch 1 oder 2, **dadurch gekennzeichnet**, daß zwei einander gegenüberliegende Winkelhebel (4) vorgesehen sind, die drehfest mit parallel zueinander verlaufenden Wellen (10) verbunden sind, die ihrerseits drehfest mit je einem Hebel (12) verbunden sind, die gemeinsam in einander entgegengesetzten Drehrichtungen bewegbar sind.

4. Ausgabeeinheit nach Anspruch 3, **dadurch gekennzeichnet**, daß die beiden Hebel (12) in ihren freien Endbereichen Längsschlitze (13) aufweisen, die von einem Stift (14) durchsetzt sind, der in Richtung des Schachtes (1) bewegbar ist.

## Claims

1. An output unit with a stack of pieces to be output one by one and with a chute (1) extending perpendicularly or downwardly inclined and receiving a stack (7), the inside cross section corresponds to the respective dimensions of the pieces to be output, and with at least one two-arm bell crank lever (4) which is arranged at the lower end of the chute (1) and held pivotably in an axle extending in a cross-sectional plane thereof and whose one arm situated below the axle is provided with a leg (5) which engages in the inside clearance of the chute in the one locking position and in a release position is retracted from the inside clearance of the chute (1), with the second arm (8) of the bell crank lever (4) disposed above the axle being provided as a holding device which is movable relative to the chute (1) for the purpose of holding the stack (7) of pieces above the piece (6) to be output, characterized in that the second arm (8) of the bell crank lever (4) arranged as a clamping device, in the release position of the leg (5) of the first arm of the bell crank lever (4), rests in a clamping manner in a plane, which extends parallel to the axis of the chute, on the stack (7) situated above the piece (6) to be output, with the zone of the second arm (8) which rests on the stack (7) having a distance from the leg (5), which engages in the inside clearance of the chute (1) in the locking position of the first arm, said distance corresponds at least to the height of the pieces (6) to be output.

2. An output unit as claimed in claim 1, characterized in that the second arm (8) of the bell crank lever 84) which clamps the stack (7) in the release position is partly covered on the side facing the goods with an elastically deformable material, preferably an elastomer with a high coefficient of friction, with a distance corresponding to at least the height of the pieces (6) to be output being present between the lining (9) and the leg (5) of the first arm of the bell crank lever (4).

3. An output unit as claimed in claim 1 or 2, characterized in that two mutually opposed bell crank levers (4) are provided which are connected torsionally rigidly with shafts (10) extending mutually parallel, which on their part are each torsionally rigidly connected to a lever (12) each which are jointly movable in mutually opposed directions of rotation.

4. An output unit as claimed in claim 3, characterized in that the two levers (12) are provided in their free end zones with longitudinal slots (13) which are penetrated by a pin (14) which is movable in the direction of the chute (1).

## Revendications

1. Unité de sortie comportant une pile d'articles devant être délivrés individuellement, et un conduit (1) qui loge la pile (16) et qui s'étend verticalement ou obliquement vers le bas et dont la section transversale libre correspond aux dimensions correspondantes des articles à délivrer, et au moins un levier coudé à deux bras (4), qui est disposé à l'extrémité inférieure du conduit (1) et est retenu de manière à pouvoir pivoter autour d'un axe qui s'étend dans un plan de coupe transversal du conduit et dont le bras, situé au-dessous de l'axe, possède une branche (5) qui, dans une position de blocage, s'engage dans l'espace libre du conduit et qui, dans une position de libération, est rétractée hors de l'espace libre du conduit (1), le second bras (8), situé au-dessus de l'axe, du levier coudé (4) étant prévu en tant que dispositif de retenue déplaçable par rapport au conduit (1) pour retenir la pile (7) d'articles, qui est située au-dessus de l'article (6) à délivrer, caractérisée en ce que, lorsque la branche (5) du premier bras du levier coudé (4) est dans la position de libération, le second bras (8), agencé sous la forme d'un dispositif de serrage, du levier coudé (4) s'applique contre la pile (7) située au-dessus de l'article (6) à délivrer, en produisant un serrage dans un plan qui s'étend essentiellement parallèlement à l'axe du conduit, la partie du second bras (8), qui s'applique contre la pile (7), étant séparée de la branche (5), qui s'engage dans l'espace libre du conduit (1) lorsque le premier bras est dans la position de blocage, par une distance qui correspond au moins à la hauteur des articles (6) à délivrer.

2. Unité de sortie selon la revendication 1, caractérisée en ce que le second bras (8) du levier coudé (4), qui, dans la position de libération, serre la pile (7), est recouvert en partie par un matériau déformable élastiquement, de préférence un élastomère possédant un coefficient de frottement élevé, au niveau de la face tournée vers les marchandises à délivrer, au moins une distance, qui correspond à la hauteur des articles (6) à délivrer, étant présente entre le revêtement (9) et la branche (5) du premier bras du levier coudé (4).

3. Unité de sortie selon la revendication 1 ou 2, caractérisée en ce que sont prévus deux leviers coudés (4), qui sont en vis-à-vis l'un de l'autre et sont reliés, avec blocage en rotation à des arbres (10) parallèles entre eux et qui pour leur part sont reliés avec blocage en rotation à des leviers respectifs (12), qui sont déplaçables en commun dans des sens de rotation réciproquement opposés.

4. Unité de sortie selon la revendication 3, caractérisé en ce que les deux leviers (12) possèdent, dans leurs zones d'extrémité libres, des £entes longitudinales (13), qui sont traversées par une tige (14) qui est déplaçable dans la direction du conduit (1).
